(19) **Europäisches Patentamt**

**European Patent Office**

**Office européen des brevets**

(11) Veröffentlichungsnummer: **0 378 971**

**A1**

(12) **EUROPÄISCHE PATENTANMELDUNG**

(21) Anmeldenummer: **89830017.3**

(22) Anmeldetag: **18.01.89**

(51) Int. Cl.⁵: **F03G 7/10**

(43) Veröffentlichungstag der Anmeldung:
**25.07.90 Patentblatt 90/30**

(84) Benannte Vertragsstaaten:
**AT BE DE ES FR GB GR NL SE**

(71) Anmelder: **Magri, Giuseppe**
**Via Vallombrosa, 6**
**I-50127 Firenze(IT)**

(72) Erfinder: **Magri, Giuseppe**
**Via Vallombrosa, 6**
**I-50127 Firenze(IT)**

(54) **Selbstgetriebene Maschinen, die durch Ausnutzung des vorteilhaften Hebelprinzips in der Lage sind, Energie zu produzieren, und wie man diese erhalten kann.**

(57) Es geht um das Grundprinzip, das die Möglichkeit begründet, selbstgetriebene Maschinen zu bauen, die das vorteilhafte Hebelprinzip ausnutzen können. Einmal in Gang gesetzt, sind sie in der Lage, Energie zu produzieren und benötigen keinen weiteren Antrieb von außen; man kann also von einem "PERPETUUM MOBILE" sprechen.

B  A  1             5                   10        I

**fig. 1**

EP 0 378 971 A1

Beschreibung der vorgelegten gewerblichen Erfindung mit dem Titel: - selbstgetriebene Maschinen, die durch Ausnutzung des vorteilhaften Hebelprinzips in der Lage sind, Energie zu produzieren, und wie man diese erhalten kann. Von Magri Giuseppe, geboren in Granarolo Emilia. Eingereicht in Florenz am 1. September 1987

Ich danke meinem HERRGOTT dafür, daß er mir, Magri Giuseppe, erlaubt hat, das in der Folge Beschriebene zu erkennen.

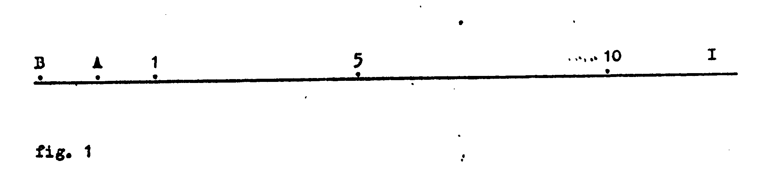

Man nimmt eine Stange, man bestimmt darauf einen Drehpunkt A, man betrachtet eine Distanz A B. Nimmt man als Maß die Kraft von 1 kg, so erhöhe ich jedesmal, wenn ich das Kg um eine Distanz AB gegen I verschiebe, das am Punkt B gehobene Gewicht um 1 kg, Abb. 1. Wenn also die in Richtung I durchlaufene Distanz 5 mal so groß ist wie die Distanz AB, so hebe ich mit 1 kg am Punkt 5 5 kg am Punkt B. Ist die Distanz 10 mal so groß, so beträgt das am Punkt B gehobene Gewicht 10 kg und so weiter.

(Distanz AB von A gegen I 5 bei B hebe ich 5 kg
Distanz AB von A gegen I 10 bei B hebe ich 10 kg)

Daher ist eine Maschine, die in der Lage ist, eine am Punkt B vorhandene Kraft auf einen beliebigen Punkt gegen I hin zu verschieben, in der Lage, die gleiche Kraft an der Zahl der gegen I durchlaufenen Distanzen AB zu liefern, multipliziert mit der Grundkrafteinheit minus 1 Krafteinheit.

Dies deshalb, weil zwischen dem Punkt AB und A1 ein Gleichgewicht mit der Resultierenden O besteht.

Das heißt, wenn die gegen I durchlaufenen Distanzen AB 10 betragen, so kann ich am Punkt B 10 kg - 1 = 9 kg ausnutzen. Betragen die durchlaufenen Distanzen 20, so kann man 20 kg -1 = 19 kg ausnutzen. Ich schließe daraus, daß eine Maschine, die geeignet ist, dieses Prinzip auszunutzen, eine selbsttreibende Maschine ist. Einmal auf die nötige Drehzahl gebracht, kann sie Energie produzieren. Eine zu diesem Zweck geeignete Maschine besteht aus einem elektrischen Generator mit einer Drehzahl von 90 Drehungen, der einen Unterbrecher von 80 mm Durchmesser besitzt, der mit der richtigen Übersetzung von einem Elektromotor bedient wird, der eine Drehzahl von 2.800 Drehungen und einen Unterbrecher von 160 mm Durchmesser besitzt.

Dies deshalb, weil die elektrischen Generatoren und Motoren garantieren, daß bei unterschiedlichen Drehzahlen die gleiche Spannung und die gleiche Frequenz erhalten bleiben. Man kann elektrische Motoren mit hoher Drehzahl und einem so großen wie möglichen Unterbrecher benutzen und an Generatoren kuppeln, deren Unterbrecher so klein wie möglich ist und die eine geringe Drehzahl haben. So erhalten wir mehr Energie als verbraucht wird und wenn die Energie vom Generator auf den Motor übertragen wird, haben wir dann eine selbsttreibende Maschine, die, einmal auf die nötige Drehzahl gebracht, in der Lage ist, unbegrenzt weiterzulaufen.

Das oben beschriebene Ergebnis kann man mit öldynamischen oder Druckluft-Maschinen oder Maschinen anderen Typs erreichen, sofern das oben erklärte Grundprinzip beachtet wird.

Ich danke dem HERRGOTT für seine Güte und bitte IHN, diese meine Erkenntnis zu segnen, damit sie der Menschheit von großem Nutzen sein möge.

## Ansprüche

1) Maschine, die das Prinzip der vorteilhaften Hebelwirkung ausnutzt und dieses in eine Drehbewegung umsetzt und aus dieser Bewegung die Energie zum eigenen Antrieb gewinnt und außerdem die von der Maschine selbst nicht benötigte Energie zur Verfügung stellt. Einmal in Gang gesetzt, benötigt sie keinen Antrieb mehr von außen.

2) Wie man Anspruch 1 und der vorangestellten Beschreibung entnehmen kann, handelt es sich um eine Maschine, die ein richtiges Übersetzungsverhältnis zwischen zwei elektrischen Maschinen weitergeben und als vorteilhafte Hebelwirkung ausnutzen kann, die trotz sehr verschiedener Drehzahlen die gleiche Spannung und Frequenz aufweisen und viel mehr Energie produzieren können, als für ihren Betrieb notwendig ist, die sich also selbst speisen und überflüssige Energie liefern kann.

Dieses Ergebnis kann man auch mit anderen Maschinentypen erreichen, öldynamischen, Druckluft-Maschinen usw., vorausgesetzt, daß sie das oben erklärte Prinzip beachten, das in der Zeichnung Abb. 1 verdeutlicht wird.

Auf Grund des oben erklärten und dargestellten Prinzips kann man Maschinen bauen, die in der Lage sind, unbegrenzt umweltfreundliche Energie zu liefern.

ZEICHNUNG (4 KOPIEN)

B    A    1        5        10    I

fig. 1

pg. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-32963 (SPITZER MASCHINENBAU) <br> * Seite 1, Zeile 1 - Seite 2, Zeile 17 * <br> --- | 1 | F03G7/10 |
| X | WO-A-8204174 (SCHYNS) <br> * Seite 1 *ZUSAMMENFASSUNG <br> --- | 1 | |
| X | FR-A-2616981 (CEBE) <br> * Seite 2, Zeile 35 - Seite 3, Zeile 29 * <br> * Seite 3, Zeile 36 - Seite 6, Zeile 10 * <br> --- | 1, 2 | |
| X | FR-A-2511735 (CHEN-SHYH) <br> * Seite 5, Zeile 1 - Zeile 17 * <br> --- | 1, 2 | |
| X | DE-A-2362852 (BERTRAMS) <br> * Seite 1, Zeile 1 - Zeile 26 * <br> --- | 1, 2 | |
| X | FR-A-2594895 (DELECLUSE) <br> * Seite V, Zeile 1 - Zeile 39; Figuren 1, 2 * <br> --- | 1 | |
| A | WO-A-8203895 (SANTA ROSA) <br> ----- | | |

**RECHERCHIERTE SACHGEBIETE (Int. Cl.5)**

F03G

Der vorliegende Recherchenbericht wurde für alle Patentansprüche erstellt

| Recherchenort | Abschlußdatum der Recherche | Prüfer |
|---|---|---|
| DEN HAAG | 18 SEPTEMBER 1989 | JORIS J.C. |